# EUROPÄISCHE PATENTSCHRIFT

(11) **EP 1 987 233 B1**
(45) Veröffentlichungstag und Bekanntmachung des Hinweises auf die Patenterteilung: **06.10.2010**
(21) Anmeldenummer: 07722888.0
(22) Anmeldetag: 22.02.2007
(51) Int. Cl.: F01C 9/00, F01C 21/08

(54) **SCHWENKKOLBENMASCHINE**
OSCILLATING PISTON MACHINE
MACHINE À PISTONS OSCILLANTS

(30) Priorität: 22.02.2006 DE 102006009197
(43) Veröffentlichungstag der Anmeldung: 05.11.2008
(73) Patentinhaber: Hüttlin, Herbert, 79539 Lörrach (DE)
(72) Erfinder: Hüttlin, Herbert, 79539 Lörrach (DE)
(74) Vertreter: Heuckeroth, Volker
(86) Internationale Anmeldenummer: PCT/EP2007/001512
(87) Internationale Veröffentlichungsnummer: WO 2007/096154

(56) Entgegenhaltungen:
- WO-A-03/067033
- WO-A-2005/098202

## Beschreibung

Die Erfindung betrifft eine Schwenkkolbenmaschine, mit einem Gehäuse, in dem zumindest ein Kolben angeordnet ist, der um eine gehäusefeste Drehachse in dem Gehäuse umlaufen kann, und der beim Umlaufen um die Drehachse um eine senkrecht zur Drehachse verlaufende Schwenkachse hin- und hergehende Schwenkbewegungen zwischen einer ersten Endstellung und einer zweiten Endstellung ausführt, wobei der zumindest eine Kolben ein erstes Lauforgan aufweist, das beim Umlaufen des Kolbens um die Drehachse entlang zumindest einer Steuerkurve läuft, die so ausgebildet ist, dass die Schwenkbewegungen des zumindest einen Kolbens aus der Umlaufbewegung des Lauforgans entlang der Steuerkurve abgeleitet werden.

Eine solche Schwenkkolbenmaschine ist aus dem Dokument WO 03/067033 A1 bekannt. Eine weitere Schwenkkolbenmaschine dieser Art ist aus WO 2005/098202 A1 bekannt.

Schwenkkolbenmaschinen und insbesondere eine Schwenkkolbenmaschine gemäß der vorliegenden Erfindung können als Brennkraftmaschinen (Verbrennungsmotoren), als Pumpen oder als Kompressoren verwendet werden. Eine Schwenkkolbenmaschine gemäß der vorliegenden Erfindung wird vorzugsweise als Brennkraftmaschine verwendet und als solche in der vorliegenden Beschreibung beschrieben.

Im Falle der Verwendung einer Schwenkkolbenmaschine als Brennkraftmaschine werden die einzelnen Arbeitstakte des Einlassens, Verdichtens, Expandierens und Ausstoßens durch hin- und hergehende Schwenkbewegungen des zumindest einen Kolbens zwischen zwei Endstellungen vermittelt.

Bei der aus dem oben genannten Dokument WO 03/067033 A1 desselben Anmelders und der aus WO 2005/098202 A1 bekannten Schwenkkolbenmaschine sind in dem kugelförmigen Gehäuse insgesamt vier Kolben angeordnet, die um eine gehäusemittige gehäusefeste Drehachse gemeinsam umlaufen und beim Umlaufen in dem Gehäuse hin- und hergehende Schwenkbewegungen um eine Schwenkachse ausführen, wobei jeweils zwei benachbare Kolben gegensinnig verschwenken. Bei dieser bekannten Schwenkkolbenmaschine sind jeweils zwei diametral bezüglich der Gehäusemitte gegenüberliegende Kolben zu einem Doppelkolben miteinander starr verbunden, und zwei derartige Kolbenpaare sind in der Gehäusemitte über Kreuz angeordnet. Zwischen jeweils zwei einander zugewandten Endflächen der Kolben der Kolbenpaare wird jeweils eine Arbeitskammer gebildet, so dass die bekannte Schwenkkolbenmaschine insgesamt zwei Arbeitskammern aufweist. Beide Arbeitskammern, die bezüglich der Gehäusemitte diametral gegenüberliegend angeordnet sind, vergrößern und verkleinern sich bei der hin- und hergehenden Schwenkbewegung der Kolben gleichsinnig.

Die Schwenkbewegungen des zumindest einen Kolbens sind durch eine erste Endstellung und eine zweite Endstellung begrenzt. Die erste Endstellung, in der die Arbeitskammer minimales Volumen aufweist, wird als OT(Oberer Totpunkt)-Stellung bezeichnet, und die zweite Endstellung, in der das Volumen der Arbeitskammer maximal ist, als UT(Unterer Totpunkt)-Stellung.

Um die Schwenkbewegungen des zumindest einen Kolbens aus seiner Umlaufbewegung um die Drehachse abzuleiten, weist der zumindest eine Kolben ein Lauforgan auf, das entlang einer Steuerkurve läuft, die in der Innenwand des Gehäuses selbst oder an einem mit der Gehäuseinnenwand verbundenen Kurvenstück ausgebildet ist. Die Steuerkurve erstreckt sich um die Drehachse herum und ist entsprechend der herbeizuführenden hin- und hergehenden Schwenkbewegungen kurvig ausgeführt, d.h. weist Bereiche auf, die von der Drehachse weiter beabstandet sind und Bereiche, die von der Drehachse weniger weit beabstandet sind.

Insbesondere bei einer Ausgestaltung einer solchen Schwenkkolbenmaschine, bei der der zumindest eine Kolben in der OT-Stellung sich nahe der Drehachse befindet, während er in der UT-Stellung von der Drehachse weiter beabstandet ist, unterstützt die Fliehkraft aufgrund der Umlaufbewegung des zumindest einen Kolbens um die Drehachse die Bewegung des Kolbens von der OT-Stellung in die UT-Stellung. Bei geringen Drehzahlen, insbesondere beim Anlassen der Schwenkkolbenmaschine, sind diese Fliehkräfte jedoch gering. Ist in dem Gehäuse auf der gegenüberliegenden Seite der Schwenkachse ein zweiter Schwenkkolben vorhanden, der gerade den Arbeitstakt des Expandierens nach dem Zünden eines Brennstoff-Luft-Gemisches ausführt, während der zumindest eine erste Kolben gerade den Arbeitstakt des Ansaugens ausführt, kann es vorkommen, dass der sich durch den Arbeitstakt des Expandierens aufbauende Druckstau die Schwenkbewegung des ersten Kolbens aus der OT-Stellung in die UT-Stellung bremst, so dass der erste Kolben nicht rechtzeitig mit direktem und sicherem Kontakt seines Lauforgans an der Steuerkurve in die UT-Stellung gelangen kann.

Aber auch bei hohen Drehzahlen, bei denen eine ausreichende Fliehkraft zur Unterstützung der Schwenkbewegung des zumindest einen Kolbens von der OT-Stellung in die UT-Stellung vorhanden ist, sind die Fliehkräfte in der OT-Stellung noch klein, und es kann nicht ausgeschlossen werden, dass das Lauforgan des zumindest einen Kolbens nicht mit der erforderlichen Präzision entlang der Steuerkurve läuft, sondern seinen Kontakt mit der Steuerkurve verliert, wodurch die Schwenkbewegung des zumindest einen Kolbens unstetig sein kann. Damit ist gemeint, dass die Schwenkbewegung des zumindest einen Kolbens stellenweise unterbrochen oder zumindest verlangsamt sein kann, während sie in anderen Bereichen dann beschleunigt ist. Dabei kann sogar der unerwünschte Fall auftreten, dass der zumindest eine Kolben seine UT-Stellung verspätet oder gar nicht erreicht. Dies beeinträchtigt die Laufeigenschaften, insbesondere die Laufruhe einer solchen Schwenkkolbenmaschine.

Der Erfindung liegt daher die Aufgabe zugrunde, eine Schwenkkolbenmaschine der eingangs genannten Art dahingehend weiterzubilden, dass die Laufeigenschaften verbessert sind.

Erfindungsgemäß wird diese Aufgabe hinsichtlich der eingangs genannten Schwenkkolbenmaschine dadurch gelöst, dass dem Kolben zusätzlich zu dem Lauforgan Rückführmittel zum Unterstützen der Rückführung des zumindest einen Kolbens zumindest von der ersten Endstellung in die zweite Endstellung zugeordnet sind, wobei die Rückführmittel ein zweites Lauforgan aufweisen, das mit dem zumindest einen Kolben verbunden ist, und das entlang einer der Steuerkurve axial in Bezug auf die Drehachse seitlich zur benachbarten zweiten Steuerkurve läuft, wenn der zumindest eine Kolben um die Drehachse umläuft.

Die erfindungsgemäße Schwenkkolbenmaschine weist demnach für den zumindest einen Kolben zusätzlich zu dem Lauforgan, das entlang der Steuerkurve läuft, Rückfühlmittel zum Unterstützen der Rückführung des zumindest einen Kolbens zumindest von der ersten Endstellung in die zweite Endstellung auf. Die vorgesehenen Rückführmittel können selbstverständlich auch die Rückführung des zumindest einen Kolbens von der zweiten Endstellung in die erste Endstellung unterstützen. Die erfindungsgemäße Ausgestaltung ist insbesondere dann vorteilhaft, wenn der zumindest eine Kolben in der ersten Endstellung näher an der Drehachse liegt als in der zweiten Endstellung. In diesem Fall erfolgt die Schwenkbewegung des zumindest einen Kolbens von der ersten Endstellung in die zweite Endstellung fliehkraftunterstützt, wobei jedoch, wie oben bereits beschrieben, diese Fliehkräfte bei geringen Drehzahlen und insbesondere in der OT-Stellung möglicherweise unzureichend sind, um den zumindest einen Kolben sicher von der ersten Endstellung in die zweite Endstellung zu führen. Die erfindungsgemäß vorgesehenen Rückführmittel sind so ausgebildet, dass das Lauforgan des zumindest einen Kolbens während der Schwenkbewegung von der ersten in die zweite Endstellung stets in Kontakt mit der Steuerkurve gehalten wird. Durch das Vorsehen der erfindungsgemäßen Rückführmittel zum Unterstützen der Rückführung des zumindest einen Kolbens zumindest von der ersten Endstellung in die zweite Endstellung werden die Laufeigenschaften der erfindungsgemäßen Schwenkkolbenmaschine, insbesondere ihre Laufruhe, verbessert.

Die Rückführmittel weisen ein zweites Lauforgan auf, das mit dem zumindest einen Kolben verbunden ist, und das entlang einer der Steuerkurve benachbarten zweiten Steuerkurve läuft, wenn der zumindest eine Kolben um die Drehachse umläuft.

Der zumindest eine Kolben weist demnach zusätzlich zu dem Lauforgan, das entlang der ersten Steuerkurve läuft, ein zweites Lauforgan auf, das entlang einer separaten Steuerkurve, die der ersten Steuerkurve benachbart ist, läuft. Das erste Lauforgan kann somit derart an dem zumindest einen Kolben positioniert werden, dass es vorwiegend die radialen Druckkräfte aufnimmt, um den Kolben gehäuseseitig abzustützen, während das zweite Lauforgan maßgeblich die Funktion hat, den zumindest einen Kolben sicher zumindest von der ersten Endstellung in die zweite Endstellung zu führen.

In einer bevorzugten Ausgestaltung ist die zweite Steuerkurve so ausgebildet, dass das entlang der zweiten Steuerkurve laufende zweite Lauforgan einen Zug auf den zumindest einen Kolben in Richtung zur zweiten Endstellung ausübt.

Diese Maßnahme ist insbesondere dann von Vorteil, wenn die erste Endstellung näher an der Drehachse liegt als die zweite Endstellung des zumindest einen Kolbens. In diesem Fall bewirkt das zweite Lauforgan, das entlang der zweiten Steuerkurve läuft, dass der Kolben von der ersten Endstellung in die zweite Endstellung mit einer Zugkraft beaufschlagt wird, die eine sichere Führung der Schwenkbewegung des zumindest einen Kolbens von der ersten Endstellung in die zweite Endstellung gewährleistet.

In weiteren bevorzugten Ausgestaltungen ist das zweite Lauforgan eine Laufrolle oder ein Gleitschuh.

Das Vorsehen einer Laufrolle als zweites Lauforgan hat den Vorteil einer reibungsärmeren Führung des zweiten Lauforgans an der zweiten Steuerkurve, während ein Gleitschuh, der entlang der zweiten Steuerkurve gleitet, eine konstruktiv einfachere Bauweise des zweiten Lauforgans darstellt.

In einer weiteren bevorzugten Ausgestaltung ist das zweite Lauforgan an dem Kolben federnd gelagert.

Gegenüber einer starren Verbindung des zweiten Lauforgans mit dem zumindest einen Kolben hat die federnde Lagerung des zweiten Lauforgans an dem zumindest einen Kolben den Vorteil, dass das zweite Lauforgan relativ zum ersten Lauforgan zumindest geringfügig nachgiebig beweglich ist, wodurch beispielsweise fertigungsbedingte Toleranzen bei der Fertigung der beiden Steuerkurven in dem Gehäuse oder an einem Kurvenstück durch das federnde Spiel ausgeglichen werden können. Hierdurch wird eine ruckfreie Schwenkbewegung des zumindest einen Kolbens gewährleistet, wodurch die Laufeigenschaften und insbesondere die Laufruhe der Schwenkkolbenmaschine weiter verbessert sind.

In einer weiteren bevorzugten Ausgestaltung sind die erste Steuerkurve und die zweite Steuerkurve als im Wesentlichen parallel zueinander verlaufende Kurvennuten ausgebildet, die durch einen Steg voneinander getrennt sind, wobei das erste Lauforgan und das zweite Lauforgan an zueinander gegenläufig geschwungenen Flanken der Kurvennuten geführt sind.

Vorzugsweise läuft das erste Lauforgan dabei an der dem zumindest einen Kolben zugewandten geschwungenen Flanke der ersten Kurvennut und das zweite Lauforgan an der dem Kolben abgewandten und gegenläufig geschwungenen Flanke der zweiten Kurvennut. Hierdurch wird erreicht, dass das zweite Lauforgan einen ausreichenden Zug zum Zurückziehen des zumindest einen Kolbens von der ersten Endstellung in die zweite Endstellung aufbringen kann.

In einer weiteren bevorzugten Ausgestaltung ist in dem Gehäuse zumindest ein zweiter Kolben angeordnet, der zusammen mit dem zumindest einen Kolben um die Drehachse umlaufen kann, und der um eine Schwenkachse verschwenkbar ist, die nicht parallel zu der Schwenkachse des zumindest einen Kolbens verläuft, wobei der zumindest eine zweite Kolben ein erstes Lauforgan, das entlang der zweiten Steuerkurve des zumindest einen Kolbens läuft, und ein zweites Lauforgan aufweist, das zur Unterstützung der Rückführung des zumindest einen zweiten Kolbens zumindest von einer ersten Endstellung in eine zweite Endstellung entlang der ersten Steuerkurve des zumindest einen Kolbens läuft.

Bei dieser Ausgestaltung der erfindungsgemäßen Schwenkkolbenmaschine weist diese zwei Arbeitskammern auf, wobei der Vorteil der vorstehend genannten Maßnahme darin besteht, dass insgesamt für die Führung der zumindest zwei Kolben nur zwei Steuerkurven benötigt werden, die gleichzeitig einen Teil der jeweiligen Rückführmittel zum Unterstützen der Rückführung der Kolben von der ersten Endstellung in die zweite Endstellung bilden. Die erfindungsgemäße Schwenkkolbenmaschine kann selbstverständlich auch vier Kolben aufweisen, von denen jeweils zwei ein Kolbenpaar bilden, die zwischen sich eine Arbeitskammer begrenzen. Die Schwenkachsen des zumindest einen und zumindest zweiten Kolbens verlaufen nicht parallel zueinander, sondern sind um einen Winkel zueinander versetzt, vorzugsweise um 90°. Alternativ oder zusätzlich zu Rückführmitteln, die durch ein zweites Lauforgan gebildet sind, die entlang einer zweiten Steuerkurve laufen, ist es weiterhin bevorzugt, wenn die Rückführmittel eine Unterdruckquelle zur Erzeugung eines an einer Kolbenrückseite anliegenden Unterdrucks aufweisen.

Wenn die Rückführmittel nur die Unterdruckwelle aufweisen, hat dies den Vorteil, dass auf ein zweites Lauforgan verzichtet werden kann, wodurch die Kolbenrückseite des zumindest einen Kolbens nicht vergrößert werden muss, wodurch der Schwenkhub des zumindest einen Kolbens insgesamt größer sein kann als wenn ein zusätzliches zweites Lauforgan auf der Kolbenrückseite angeordnet ist. Ein derartiger Unterdruck wird gerade so gewählt, dass die Schwenkbewegung des zumindest einen Kolbens von der zweiten Endstellung in die erste Endstellung nicht beeinträchtigt wird. Ein Unterdruck im Bereich von 1000 - 2000 kp/m² ist für die Zwecke der Unterstützung der Rückführmittel des zumindest einen Kolbens von der ersten Endstellung in die zweite Endstellung ausreichend.

In einer weiteren bevorzugten Ausgestaltung ist das erste Lauforgan als Rolle ausgebildet, unter dessen Lauffläche Ventilationsschaufeln angeordnet sind.

Diese Maßnahme hat den Vorteil, dass das erste Lauforgan nicht nur die Führung des zumindest einen Kolbens entlang der Steuerkurve ausübt, sondern auch gleichzeitig als Ventilator zur Kühlung des zumindest einen Kolbens dient. Beim Laufen der Rolle entlang der Steuerkurve wird durch die Ventilationsschaufeln Luft in die Kolbenrückseite angesaugt und über eine entsprechende Beabstandung zwischen der Rolle und dem Kolben wieder ausgeblasen. Auf diese Weise wird Kühlluft in den zumindest einen Kolben hineingeführt, die der Schwenkkolbenmaschine beispielsweise über eine geschlossene Luftkreislaufkühlung zugeführt werden kann.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:
- Fig. 1: eine perspektivische Gesamtdarstellung einer Schwenkkolbenmaschine;
- Fig. 2: die Schwenkkolbenmaschine in Fig. 1 im Längsschnitt, wobei die Kolben in einer ersten Schwenkendstellung (UT-Stellung) gezeigt sind;
- Fig. 3: die Schwenkkolbenmaschine in Fig. 1 im gleichen Schnitt wie in Fig. 2, wobei die Kolben nunmehr in einer zweiten Schwenkendstellung (OT- Stellung) gezeigt sind;
- Fig. 4: die Schwenkkolbenmaschine in Fig. 1 in einem weiteren Längsschnitt, wobei die Schnittebene in Fig. 4 gegenüber der Schnittebene in Fig. 2 und 3 um etwa 45° verkippt ist, und wobei die Kolben in einer Schwenkstel- lung gezeigt sind, die etwa mittig zwischen den Schwenkendstellungen in Fig. 2 und in Fig. 3 liegt;
- Fig. 5: eine perspektivische Darstellung eines Kolbenkäfigs der Schwenkkolben- maschine in Fig. 1 bis 4 einschließlich darin aufgenommener Kolben;
- Fig. 6a) und b): zwei Ausführungsvarianten eines Kolbens der Schwenkkolbenmaschine in Fig. 1 bis 4;
- Fig. 7: eine Explosionsdarstellung der Ausführungsvarianten der Kolben in Fig. 6a) und b);
- Fig. 8: einen perspektivischen Halblängsschnitt durch ein Kurvenstück der Schwenkkolbenmaschine in Fig. 1 bis 4;
- Fig. 9: einen weiteren Halblängsschnitt des Kurvenstücks in Fig. 8 in einer gegenüber Fig. 8 unterschiedlichen Perspektive und in kleinerem Maßstab; und
- Fig. 10: die Schwenkkolbenmaschine in Fig. 1 bis 4 in einem Blockschaltbild, das Kühl- und Schmierkreisläufe für die Schwenkkolbenmaschine veranschau- licht.

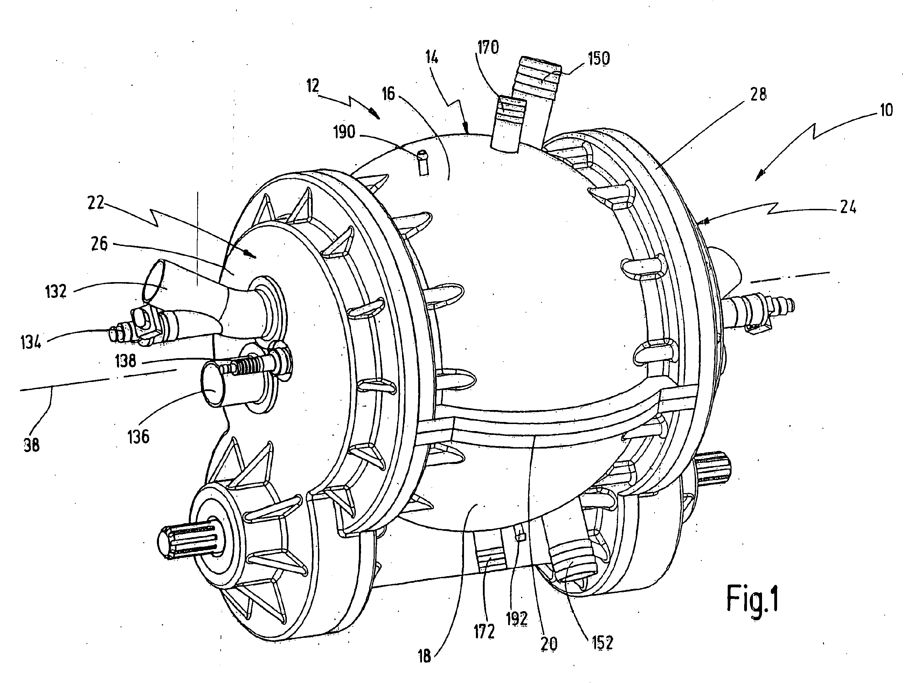

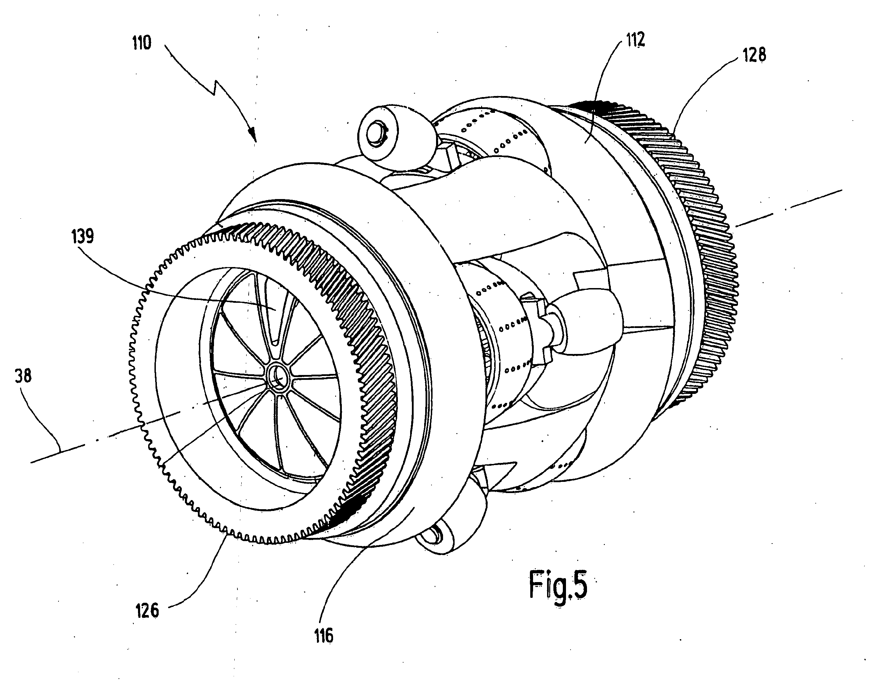

In Fig. 1 bis 4 ist eine mit dem allgemeinen Bezugszeichen 10 versehene Schwenkkolbenmaschine dargestellt. Weitere Einzelheiten der Schwenkkolbenmaschine 10 sind in Fig. 5 bis 10 dargestellt.

Die Schwenkkolbenmaschine 10 ist allgemein als Brennkraftmaschine ausgelegt, kann jedoch bei entsprechenden Modifikationen auch als Pumpe oder als Kompressor verwendet werden.

Die Schwenkkolbenmaschine 10 weist ein Gehäuse 12 auf, das in Fig. 1 geschlossen dargestellt ist. Das Gehäuse 12 weist einen mittleren Gehäuseabschnitt 14 auf, der kugelförmig ausgebildet ist. Der mittlere Gehäuseabschnitt 14 ist aus zwei Gehäusehälften 16 und 18 zusammengesetzt, die über einen Flansch 20 miteinander verbunden sind.

Das Gehäuse 12 weist weiterhin eine erste Stirnseite 22 und eine zweite Stirnseite 24 auf, die der ersten Stirnseite 22 gegenüberliegt.

Die erste Stirnseite 22 wird durch einen stirnseitigen Gehäusedeckel 26 und die zweite Stirnseite 24 durch einen stirnseitigen Gehäusedeckel 28 gebildet. Die Gehäusedeckel 26 und 28 sind mit dem mittleren Gehäuseabschnitt 14 bzw. dessen Gehäusehälften 16 und 18 verbunden. Die Gehäusedeckel 26 und 28 sind von dem mittleren Gehäuseabschnitt 14 abnehmbar, ebenso wie die Gehäusehälfte 16 von der Gehäusehälfte 18 abnehmbar ist.

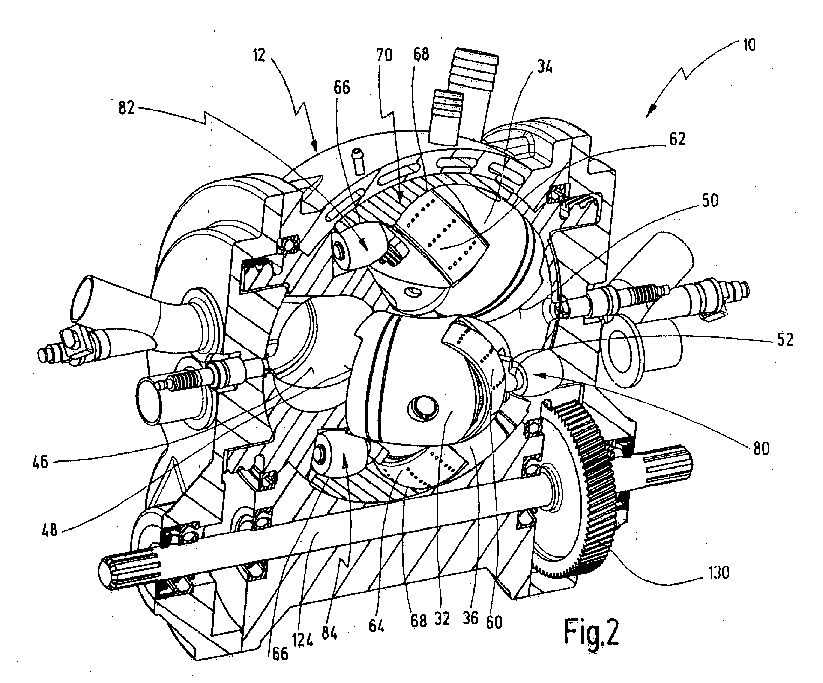

Gemäß Fig. 2 bis 4 sind im Inneren des Gehäuses 12 vier Kolben 30 bis 36 angeordnet. Die Kolben 30 bis 36 können in dem Gehäuse 12 gemeinsam um eine Drehachse 38 gemäß einem Pfeil 40 umlaufen. Die Drehachse 38 geht durch den Mittelpunkt des kugelförmigen Inneren des Gehäuses 12 hindurch und ist gehäusefest, d.h. ändert ihre Lage relativ zum Gehäuse 12 während des Umlaufens der Kolben 32 bis 36 nicht.

Die Kolben 30 bis 36 führen beim Umlaufen um die Drehachse 38 eine der Umlaufbewegung überlagerte Schwenkbewegung aus. Die Kolben 30 und 32 führen dabei hin- und hergehende Schwenkbewegungen um eine erste Schwenkachse 42 aus, die die Drehachse 38 im Mittelpunkt des Inneren des Gehäuses 12 senkrecht schneidet, während die Kolben 34 und 36 beim Umlaufen um die Drehachse 38 hin- und hergehende Schwenkbewegungen um eine zweite Schwenkachse 44 ausführen, die die Drehachse 38 ebenfalls im Mittelpunkt des Inneren des Gehäuses 12 senkrecht schneidet, aber auch zur Schwenkachse 42 senkrecht steht. Die Schwenkachsen 42 und 44 laufen mit den Kolben 30 bis 36 ebenfalls um die Drehachse 38 um. Die momentane Schwenkebene der Kolben 30 und 32 steht dabei stets senkrecht zur momentanen Schwenkebene der Kolben 34 und 36.

Es ist jedoch auch möglich, dass alle vier Kolben 30 bis 36 in einer gemeinsamen Ebene angeordnet sind und entsprechend die Schwenkachsen 42 und 44 parallel sind oder zusammenfallen.

Sowohl die Drehachse 38 als auch die Schwenkachsen 42 und 44 sind hier als geometrische Achsen zu verstehen.

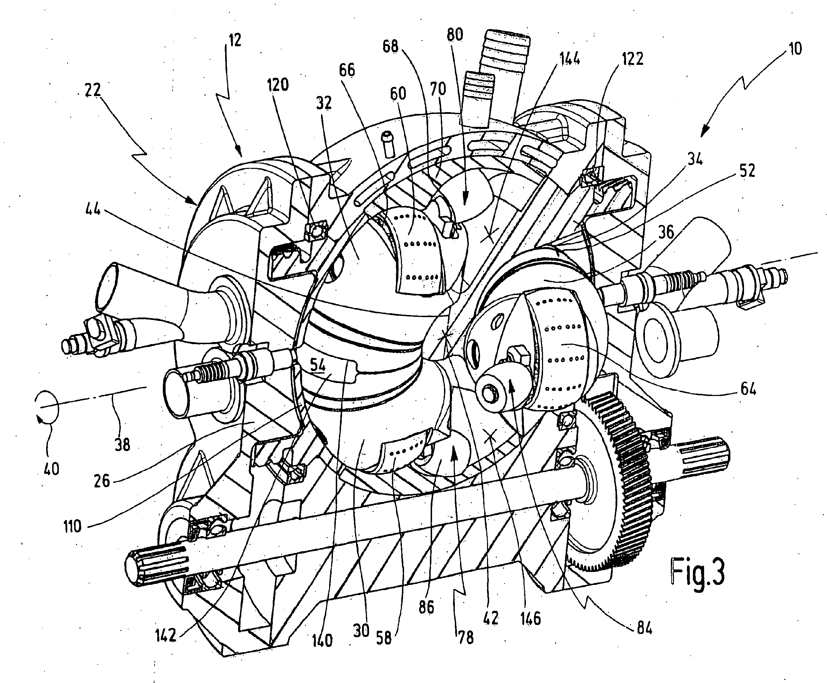

Die Schwenkbewegungen der Kolben 30 und 32 bzw. 34 und 36 erfolgen zwischen zwei Endstellungen, wobei die eine Endstellung in Fig. 2 (sog. UT-Stellung) und die andere Endstellung in Fig. 3 (sog. OT-Stellung) gezeigt ist.

Die Schwenkbewegungen der Kolben 30 und 32 einerseits und der Kolben 34 und 36 andererseits sind stets gleichsinnig, d.h. wenn die Kolben 30 und 32 auseinander schwenken, schwenken auch die Kolben 34 und 36 auseinander, und umgekehrt.

Jeder der Kolben weist eine Endfläche auf, d.h. der Kolben 30 weist eine Endfläche 46, der Kolben 32 eine Endfläche 48, der Kolben 34 eine Endfläche 50 und der Kolben 36 eine Endfläche 52 auf, wobei die Sicht auf Letztere in Fig. 2 durch ein anderes Bauteil verdeckt ist.

Die Kolben 30 und 32 bilden ein erstes Kolbenpaar, deren Endflächen 46 und 48 einander zugewandt sind. Die Endflächen 46 und 48 definieren eine erste Arbeitskammer 54. Die Kolben 34 und 36 bilden ein zweites Kolbenpaar, deren Endflächen 50 und 52 einander zugewandt sind und eine zweite Arbeitskammer 56 definieren. Entsprechend der hin- und hergehenden Schwenkbewegungen der Kolben 30 und 32 bzw. 34 und 36 vergrößern und verkleinern sich die Volumina der Arbeitskammern 54 und 56, wobei sich die Arbeitskammern 54 und 56 stets gleichsinnig vergrößern bzw. verkleinern.

Die Kolben 30 bis 36 sind in dem Gehäuse 12 so angeordnet, dass die Drehachse 38 durch beide Arbeitskammern 54 und 56 hindurchgeht, und zwar vorzugsweise in jeder Umlauf- und Schwenkstellung der Kolben 30 bis 36 mittig.

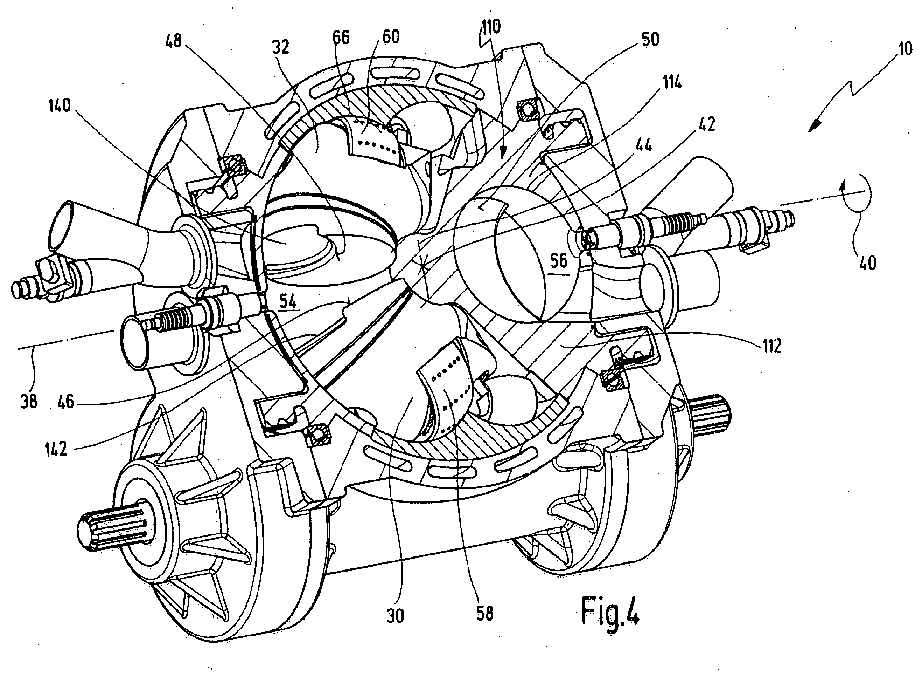

Um die Schwenkbewegungen der Kolben 30 bis 36 bei deren Umlaufbewegung um die Drehachse 38 zu erzeugen, weist jeder Kolben ein Lauforgan auf, und zwar der Kolben 30 ein Lauforgan 58 (Fig. 3 und 4), der Kolben 32 ein Lauforgan 60 (vgl. Fig. 2 bis 4), der Kolben 34 ein Lauforgan 62 (vgl. Fig. 2) und der Kolben 36 ein Lauforgan 64 (vgl. Fig. 3 und 4). Die Lauforgane 58 bis 64 sind hier als Rollen ausgebildet, wobei jedes Lauforgan 58 bis 64 an dem zugehörigen Kolben 30 bis 36 drehbar befestigt ist.

Den Lauforganen 58 und 60 der Kolben 30 und 32 ist eine erste Steuerkurve 66 zugeordnet, und den Lauforganen 62 und 64 der Kolben 34 und 36 ist eine zweite Steuerkurve 68 zugeordnet.

Die Lauforgane 58 und 60 laufen demnach entlang derselben Steuerkurve 66, und die Lauforgane 62 und 64 entlang derselben Steuerkurve 68.

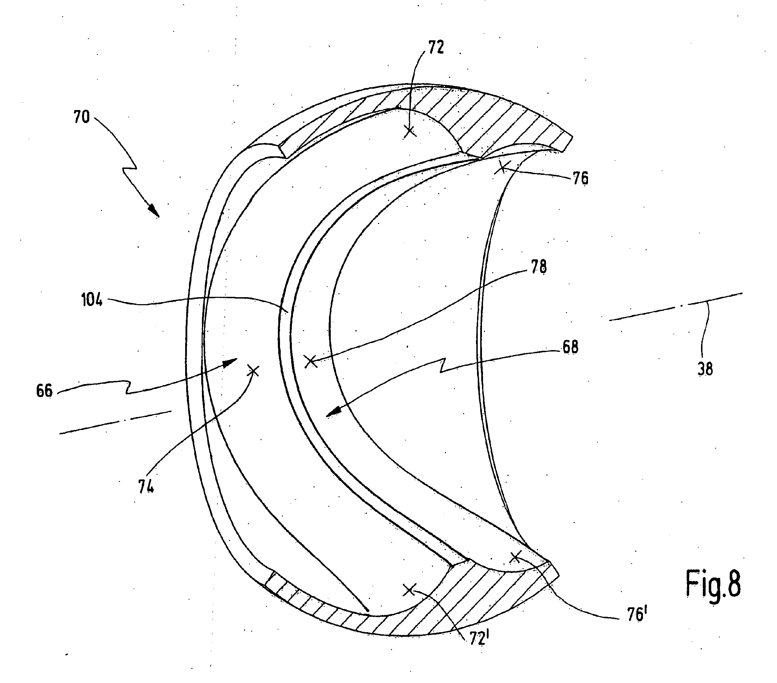

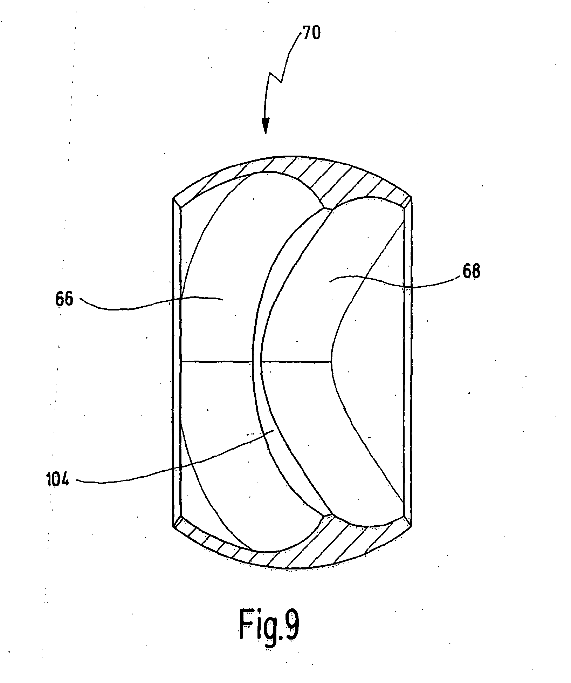

Die Steuerkurven 66 und 68 sind an einem Kurvenstück 70 ausgebildet, das in Fig. 8 und 9 in einem Längsmittelschnitt in Alleinstellung dargestellt ist. Fig. 8 und 9 zeigen somit nur eine Hälfte der Steuerkurven 66 und 68, die sich selbstverständlich über einen vollen Umfang um die Drehachse 38 erstrecken. Das Kurvenstück 70 ist im Innern des Gehäuses 12 befestigt.

Die Steuerkurven 66 und 68 weisen jeweils eine Kontur oder Kurvenführung auf, die es ermöglicht, die Schwenkbewegung der Kolben 30 und 32 bzw. 34 und 36 aus deren Umlaufbewegung um die Drehachse 38 herum abzuleiten.

Die Steuerkurven 66 und 68 sind seitlich nebeneinander benachbart ausgebildet und verlaufen im Wesentlichen parallel zueinander.

Die Schnittebene der Fig. 8 und 9 ist senkrecht zur Schnittebene der Fig. 2 und 3, in denen das Kurvenstück 70 ebenfalls zu sehen ist. In der Darstellung gemäß Fig. 8 entsprechen mit den Bezugsziffern 72 und 72' versehene Stellen der Steuerkurve 66 der UT-Stellung der Kolben 30 und 32, d.h. des linken Kolbenpaares in Fig. 2 und 3. Eine mit dem Bezugszeichen 74 und eine in Fig. 8 nicht zu sehende, bezüglich der Stelle 74 um 180° um die Drehachse 38 versetzte Stelle entspricht der OT-Stellung der Kolben 30 und 32, d.h. des linken Kolbenpaares in Fig. 3.

Mit dem Bezugszeichen 76 und 76' versehene Stellen der Steuerkurve 68 stellen entsprechend die OT-Stellung der Kolben 34 und 36 dar, d.h. des rechten Kolbenpaares in Fig. 3. Wie bereits oben erwähnt, sind die Kolben 34 und 36 gegenüber den Kolben 30 und 32 um die Drehachse 38 um 90° versetzt. Eine mit dem Bezugszeichen 78 versehene Stelle und eine in Fig. 8 nicht zu sehende, bezüglich der Drehachse 38 um 180° versetzte Stelle stellen die UT-Stellung der Kolben 34 und 36 dar, die in Fig. 2 gezeigt ist.

Zusätzlich zu den Lauforganen 58 bis 64 sind den Kolben 30 bis 36 Rückführmittel 78 bis 84 zugeordnet, d.h. dem Kolben 30 sind Rückführmittel 78, dem Kolben 32 Rückführmittel 80, dem Kolben 34 Rückführmittel 82 und dem Kolben 36 Rückführmittel 84 zugeordnet. Die Rückführmittel 78 bis 84 dienen dazu, die Rückführung der Kolben 30 bis 36 aus der OT-Stellung gemäß Fig. 3 in die UT-Stellung gemäß Fig. 2 zu unterstützen.

Da die Rückführmittel 78 bis 84 für die Kolben 30 bis 36 jeweils gleich sind, werden hier beispielhaft nur die Rückführmittel 78 des Kolbens 30 beschrieben, wobei diese Beschreibung für die übrigen Rückführmittel 80 bis 84 der Kolben 32 bis 36 ebenso gilt.

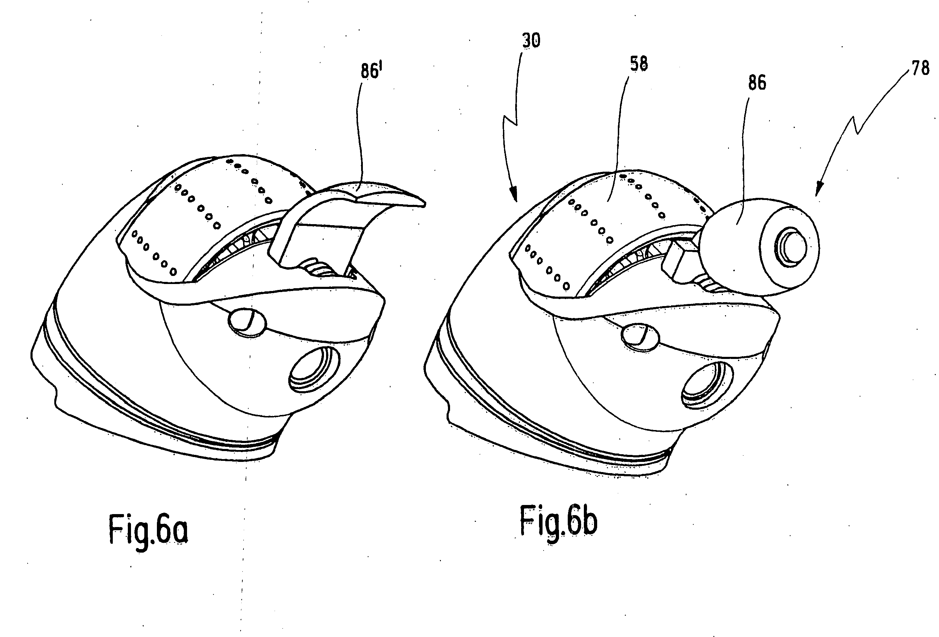

Gemäß Fig. 6b) weisen die Rückführmittel 78 für den Kolben 30 ein zweites Lauforgan 86 auf, das zusätzlich zu dem ersten Lauforgan 58 an dem Kolben 30 vorgesehen und mit dem Kolben 30 verbunden ist. Das Lauforgan 86 ist in Form einer Laufrolle ausgebildet. Alternativ kann es auch als Kugel ausgebildet sein.

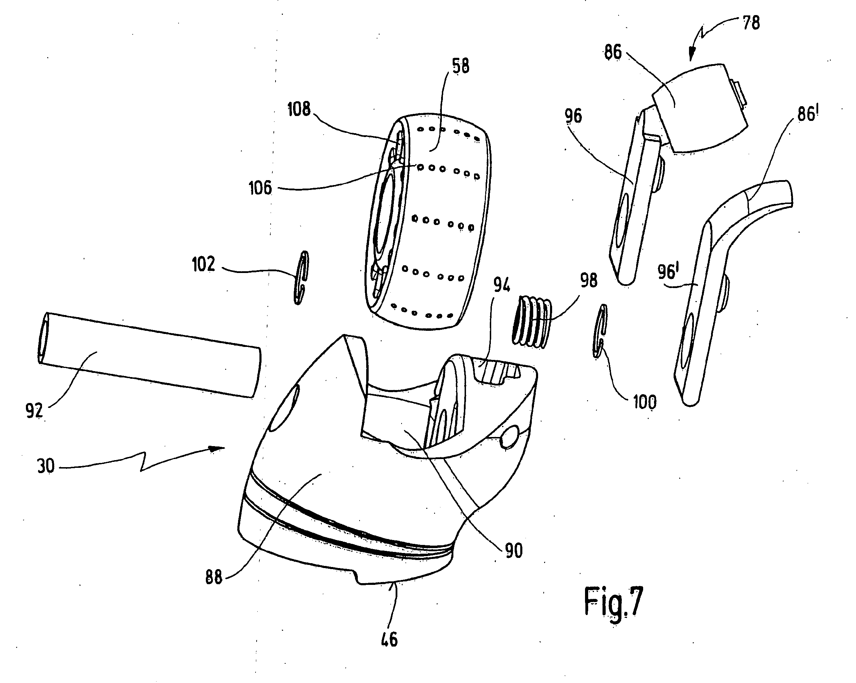

Gemäß Fig. 7 weist der Kolben 30 einen Kolbenkörper 88 auf, der eine Ausnehmung 90 aufweist, in der das Lauforgan 58, das als Laufrolle ausgebildet ist, über einen Achszapfen 92 drehbar aufgenommen ist. Die Ausnehmung 90 befindet sich auf der Rückseite des Kolbens 30, d.h. derjenigen Seite, die von der Endfläche 46 des Kolbens 30 abgewandt ist. Das Lauforgan 58 kann auch als Kugel ausgebildet sein.

Der Ausnehmung 90 benachbart ist auf der Rückseite des Kolbens 30 eine weitere Ausnehmung 94 ausgespart, die der Aufnahme des zweiten Lauforgans 86 dient. Das zweite Lauforgan 86 der Rückführmittel 78 ist an einer Lasche 96 befestigt, die in die Ausnehmung 94 eintaucht und ebenfalls auf dem Achszapfen 92 sitzt, wobei die Lasche 96 jedoch nicht um den Achszapfen 92 drehbar ist. Das zweite Lauforgan 86 ist an dem Kolben 30 federnd gelagert, und zwar über eine Feder 98, die hier als Schraubenfeder ausgebildet ist. Das zweite Lauforgan 86 ist dadurch relativ zu dem ersten Lauforgan 58 geringfügig beweglich, und zwar in Richtung der Beabstandung des zweiten Lauforgans 86 von dem ersten Lauforgan 58, d.h. auf das erste Lauforgan 58 zu und von diesem weg.

Zwei Sicherungsringe 100 und 102 sichern den Achszapfen 92 in dem Kolbenkörper 88 des Kolbens 30.

Gemäß Fig. 3 läuft das zweite Lauforgan 86 der Rückführmittel 78 des Kolbens 30 in der zweiten Steuerkurve 68, in der auch die ersten Lauforgane 62 und 64 der Kolben 34 und 36 laufen. Aufgrund des Versatzes der Schwenkebene der Kolben 34 und 36 zur Schwenkebene der Kolben 30 und 32 stören sich das zweite Lauforgan 86 des Kolbens 30 und die ersten Lauforgane 62 und 64 der Kolben 34 und 36 dabei nicht. In der zweiten Steuerkurve 68 laufen ebenfalls die Rückführmittel 80 des Kolbens 32, und umgekehrt laufen die Rückführmittel 82 und 84 für die Kolben 34 und 36, die ebenfalls als zweites Lauforgan an den Kolben 34 und 36 vorgesehen sind, in der ersten Steuerkurve 66, in der die ersten Lauforgane 58 und 60 der Kolben 30 und 32 laufen.

Aufgrund dieser Anordnung sind weiterhin nur die zwei Steuerkurven 66 und 68 erforderlich, die ebenso erforderlich wären, wenn die Kolben 30 und 36 ohne die Rückführmittel 78 bis 84 ausgebildet wären.

Die Rückführmittel 78 und 80 der Kolben 30 und 32, die in der zweiten Steuerkurve 68 laufen, üben ausgehend von der OT-Stellung in Fig. 3 auf die Kolben 30 und 32 einen Zug in Richtung der UT-Stellung aus. Dies wird u.a. dadurch bewerkstelligt, dass die Steuerkurven 66 und 68 als im Wesentlichen parallel zueinander verlaufende Kurvennuten ausgebildet sind, die durch einen Steg 104 voneinander getrennt sind, wobei die ersten Lauforgane 58 und 60 und die Rückführmittel 78 und 80 an zueinander gegenläufig geschwungenen Flanken der Kurvennuten geführt sind, wie aus Fig. 3 und aus Fig. 2 hervorgeht.

Alternativ zur Ausgestaltung der Rückführmittel 78 bis 84 können diese anstatt einer Laufrolle 86 auch einen Gleitschuh 86' aufweisen, der durch eine ballige Fläche am freien Ende der Lasche 96' gebildet ist (Fig. 6a) und Fig. 7). Die übrige Bauweise des Kolbens 30 und des ersten Lauforgans 58 bleibt dabei unverändert.

Wie insbesondere aus Fig. 7 hervorgeht, sind die ersten Lauforgane 58 bis 64 jeweils als Rolle ausgebildet, dessen Lauffläche Öffnungen 106 aufweist, wobei unter der Lauffläche Ventilationsschaufeln angeordnet sind, die im vorliegenden Ausführungsbeispiel radial zur durch den Achszapfen 92 gebildeten Drehachse der Lauforgane 58 bis 64 gerichtet sind. Beim Entlanglaufen der Lauforgane 58 bis 64 an den Steuerkurven 66 und 68 entsteht durch die Rotation der Lauforgane 58 bis 64 durch die Ventilationsschaufeln 108 ein Ventilationseffekt, der über die Ausnehmungen 90 und 94 in den Kolben 30 bis 36 eine Luftdurchflutung und damit Kühlung der Kolben 30 bis 36 bewirkt.

Die Kolben 30 bis 36 sind in dem Gehäuse 12 ferner in einem um die Drehachse 38 gemeinsam mit den Kolben 30 bis 36 umlaufenden Kolbenkäfig 110 gleitend gelagert, der in Fig. 5 zusammen mit den Kolben 30 bis 36, jedoch ohne das Gehäuse 12, dargestellt ist. In dem Kolbenkäfig 110 sind die Kolben 30 bis 36 beispielsweise mittels nicht dargestellter Nut-Feder-Verbindungen gegen Verdrehung oder Verkippung gesichert.

Der Kolbenkäfig 110 weist einen ersten Hauptlagerabschnitt 112 mit einer Bohrung 114 darin auf, wobei in Letzterer die Kolben 34 und 36 gleitend gelagert sind. Zusammen mit den Endflächen 50 und 52 begrenzt die Bohrung 114 die Arbeitskammer 56.

Der Kolbenkäfig 110 weist entsprechend einen zweiten Hauptlagerabschnitt 116 auf, der ebenfalls eine Bohrung 118 aufweist, in dem die Kolben 30 und 32 gleitend gelagert sind, und die zusammen mit den Endflächen 46 und 48 der Kolben 30 und 32 die Arbeitskammer 54 begrenzt. Aufgrund der um 90° versetzten Anordnung der Kolben 30 und 32 gegenüber den Kolben 34 und 36 sind auch die Bohrungen 114 und 116 senkrecht zueinander in dem Kolbenkäfig 110 ausgeführt.

Der Kolbenkäfig 110 ist über die Hauptlagerabschnitte 112 und 116 mittels Lagern 120 und 122 um die Drehachse 38 drehbar in dem Gehäuse 12 gelagert.

Der Kolbenkäfig 110 dient des Weiteren zum Abgriff der Umlaufbewegung der Kolben 30 bis 36 und des Kolbenkäfigs 110 um die Drehachse 38 von bzw. auf eine Antriebs/Abtriebswelle 124. Dazu ist der Kolbenkäfig 110 an seinen Enden mit jeweils einer Außenverzahnung 126 und 128 versehen, von denen zumindest eine, im gezeigten Ausführungsbeispiel die Außenverzahnung 128 mit einem Zahnrad 130, das mit der Abtriebswelle 124 fest verbunden ist, kämmt. Die Abtriebswelle 124 ist bei der Schwenkkolbenmaschine 10 demnach nicht koaxial auf der Drehachse 38 angeordnet, sondern außeraxial.

Nachfolgend wird die Funktionsweise der Schwenkkolbenmaschine 10 kurz beschrieben.

Ausgehend von der in Fig. 3 dargestellten OT-Stellung der Kolben 30 bis 36 schwenken die Kolben 30 und 32 bzw. 34 und 36 in die in Fig. 2 gezeigte UT-Stellung, wobei die Kolben 30 bis 36 dabei um die Drehachse 38 um 90° umlaufen. Das Auseinanderschwenken der Kolben 30 und 32 bzw. der Kolben 34 und 36 wird durch das Laufen der Lauforgane 58 bis 64 an den Steuerkurven 66 und 68 vermittelt, und dabei durch die Rückführmittel 78 bis 84 unterstützt, die gewährleisten, dass das Auseinanderschwenken der Kolben 30 und 32 bzw. 34 und 36 gleichmäßig, ohne Unterbrechung und ohne Abbremsung und insbesondere ohne Verlust des Kontakts der Lauforgane 58 bis 64 mit den Steuerkurven 66 und 68 erfolgt.

Nach einem weiteren Umlauf der Kolben 30 bis 36 um die Drehachse 38 um 90° verschwenken die Kolben 30 bis 36 aus der UT-Stellung wieder in die OT-Stellung, usw. Beim Auseinanderschwenken der Kolben 30 und 32 bzw. 34 und 36 von der OT-Stellung in die UT-Stellung findet beispielsweise in der Arbeitskammer 54 der Arbeitstakt des Ansaugens und in der Arbeitskammer 56 der Arbeitstakt des Expandierens nach Zündung des Brennstoff-Luft-Gemisches statt. Beim darauffolgenden Aufeinanderzuverschwenken der Kolben 30 und 32 bzw. 34 und 36 findet dann in der Arbeitskammer 54 der Arbeitstakt des Verdichtens und in der Arbeitskammer 56 der Arbeitstakt des Ausstoßens statt, usw. Über eine volle Umdrehung der Kolben 30 bis 36 um die Drehachse 38 findet in jeder Arbeitskammer 54 und 56 jeweils ein Arbeitstakt des Arbeitens (Expandierens) statt.

In dem Gehäusedeckel 26 sind ferner ein Einlassstutzen 132, der im vorliegenden Ausführungsbeispiel mit einer Einspritzdüse 134 kombiniert ist, zum Einlassen eines Brennstoff-Luft-Gemisches in die Arbeitskammer 54, ein Auslassstutzen 136 zum Auslassen von verbranntem Brennstoff-Luft-Gemisch aus der Arbeitskammer 54 und eine Zündkerze 138 angeordnet. Der Gaswechsel in und aus der Arbeitskammer 54 erfolgt somit an der Stirnseite 22 des Gehäuses 12. Im Kolbenkäfig 110 ist dazu eine Gaswechselöffnung 139 vorgesehen, die die erforderlichen Gaswechsel steuert.

Der Stirnseite 24 sind entsprechende Gaswechselöffnungen nebst Einspritzdüse und Zündkerze für die Arbeitskammer 56 zugeordnet, wobei die Anordnung gegenüber der Anordnung an der Stirnseite 22 um 180° bezüglich der Drehachse 38 versetzt ist. Die Endflächen der Kolben 30 bis 36 weisen in ihrem jeweiligen Bereich, der der Stirnseite des Kolbenkäfig 110 zugewandt ist, eine muldenartige Vertiefung auf, wie für die Kolben 30 und 32 mit den Bezugszeichen 140 und 142 dargestellt ist. Die muldenartigen Vertiefungen 140 und 142, die entsprechend auch an den Kolben 34 und 36 vorgesehen sind, bewirken, dass in der OT-Stellung der Kolben 30 und 32 noch ein endliches Volumen der Arbeitskammer 54 verbleibt, wodurch bei einer Zündung des in der Arbeitskammer 54 gerade verdichteten Brennstoff-Luft-Gemisches die Kolben 30 und 32 mit einer optimalen Hebelwirkung auseinandergedrückt werden. Gemäß Fig. 3 sind den Kolben 30 und 32 der Arbeitskammer 54 abgewandt jeweils rückwärtige Kammern 144 bzw. 146 zugeordnet, die sich im Volumen verkleinern, wenn sich die Arbeitskammer 54 vergrößert, und umgekehrt. Die Kammern 144 und 146 können als Vordruckkammern zum Vorkomprimieren von Verbrennungsluft beim Auseinanderschwenken der Kolben 30 und 32 verwendet werden, wobei dann in der UT-Stellung der Kolben 30 und 32 die vorkomprimierte Verbrennungsluft über eine Ventilanordnung (nicht dargestellt) in den Kolben 30 und 32 durch diese hindurch in die Arbeitskammer 54 injiziert werden kann. Vergleichbare rückwärtige Kammern bzw. Vordruckkammern können entsprechend für die Kolben 34 und 36 vorgesehen sein.

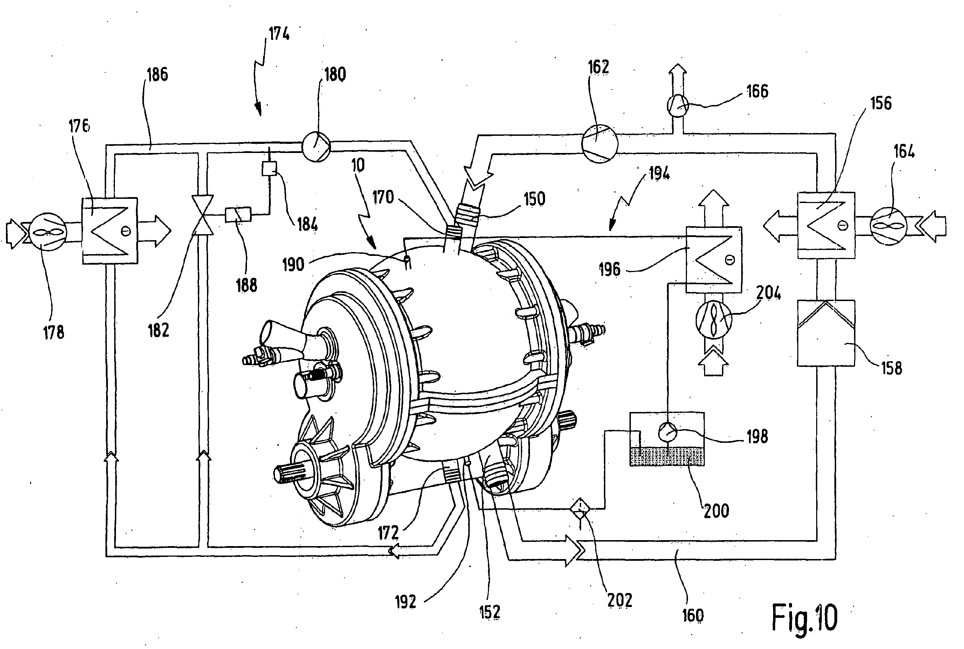

Die Kammern 144 und 146 können aber auch einfach als Kühlräume für eine Luftkühlung der Kolben 30 und 32 dienen. Eine derartige Luftkühlung wird nachfolgend mit Bezug auf Fig. 1 und 10 beschrieben.

Gemäß Fig. 1 ist an dem Gehäuse 12 ein Lufteintritt 150 und ein entsprechender Luftaustritt 152 vorhanden, wobei über den Lufteintritt 150 Kühlluft für die Kühlung des Innenraums des Gehäuses 12, insbesondere der Kolbenrückräume, zugeführt und über den Luftaustritt 152 wieder ausgelassen werden kann. Der Lufteintritt 150 und der Luftaustritt 152 sind mit einem Luftkühlkreislauf 154 verbunden, der einen Luftkühler 156, einen Luftfilter 158, eine Zirkulationsleitung 160 und einen Kühlluftventilator 162 aufweist. Der Luftkühler 156 ist ferner mit einem Kühlventilator 164 versehen. Der Kühllüftventilator 162 sorgt für die entsprechende Zirkulation der Kühlluft durch die Schwenkkolbenmaschine 10.

Alternativ oder zusätzlich zu den oben beschriebenen Rückführmitteln 78 bis 84 für die Kolben 30 bis 36, die als zweite Lauforgane zusätzlich zu den ersten Lauforganen 58 bis 64 vorgesehen sind, können die Rückführmittel auch eine Unterdruckquelle 166 aufweisen, die an die Kolbenrückseiten (Kammern 144, 146 der Kolben 30 und 32 und die entsprechenden Kolbenrückräume der Kolben 34 und 36), d.h. den den Arbeitskammern 54 und 56 abgewandten Seiten der Kolben 30 bis 36 einen Unterdruck anlegt, der die Kolben 30 bis 36 von der OT-Stellung in die UT-Stellung zurückzieht bzw. deren Rückführung in die UT-Stellung unterstützt, so dass die ersten Lauforgane 58 bis 64 stets mit Kontakt an den Steuerkurven 66 und 68 geführt sind.

Die Unterdruckquelle 166 ist bei dem Ausführungsbeispiel gemäß Fig. 10 nun vorteilhafterweise in den Kühlluftkreislauf 154 integriert. Während des Betriebes der Schwenkkolbenmaschine 10 erzeugt die Unterdruckquelle 166, die als Ventilator ausgebildet sein kann, im jeweiligen Kolbenrückraum einen stetigen, stabilen Unterdruck, der einen Wert im Bereich von 1000 - 2000 kp/m² betragen kann. Bei einem solchen Unterdruck, der auch als leichtes Vakuum bezeichnet werden kann, stellt sich bei einer Fläche von 1 dm² ein Druck von 10 - 20 kp/m² ein. Bei einem Durchmesser der Kolben 30 bis 36 von etwa 90 mm, der eine Fläche von 0,635 dm² darstellt, stellt sich somit ein wirksamer Saugdruck von 6,35 kp/m² bis 12,70 kp/m² ein. Ein solcher Saugdruck ist ausreichend, um die Lauforgane 58 bis 64 der Kolben 30 bis 36 zu jeder Zeit in einem stabilen Rollkontakt mit der jeweiligen Steuerkurve 66 bzw. 68 zu halten.

Wenn eine unterstützende Rückführung der Kolben 30 bis 36 mittels Unterdrucks nicht vorgesehen werden soll, ist der Kühlluftkreislauf vorzugsweise ein geschlossener Kreislauf.

Gemäß Fig. 1 ist an dem Gehäuse ferner ein Wassereintritt 170 und ein Wasseraustritt 172 vorhanden, über die Kühlwasser für die Kühlung des Gehäuses 12 selbst durch dieses hindurch zirkuliert werden kann.

Der Wassereintritt 170 und der Wasseraustritt 172 sind mit einem Kühlwasserkreislauf 174 verbunden, der einen Wasserkühler 176, dem ein Ventilator 178 zugeordnet ist, und eine Wasserpumpe 180 aufweist. Der Wasserkreislauf 174 weist weiterhin ein Ventil 182 und einen Temperaturfühler 184 auf, wobei der Temperaturfühler 184 mit einer Hauptleitung 186 des Kühlwasserkreislaufs 174 verbunden ist und über eine Steuerung 188 das Ventil 182 steuert. Mit dieser Anordnung kann eine weitgehend konstante Kühlwassertemperatur eingestellt werden.

Schließlich weist die Schwenkkolbenmaschine 10 gemäß Fig. 1 einen Öleintritt 190 und einen Ölaustritt 192 in dem Gehäuse 12 auf. Über den Öleintritt 190 wird Öl für die Schmierung und Kühlung der rotierenden Teile der Schwenkkolbenmaschine 10, insbesondere des Kolbenkäfigs 110 und der Kolben 30 bis 36 nebst allen Lauforganen bewerkstelligt.

Gemäß Fig. 10 sind der Öleintritt 190 und der Ölaustritt 192 mit einem Ölkreislauf 194 verbunden, der einen Ölkühler 196, eine Ölpumpe 198, eine Ölwanne 200, einen Ölfilter 202 und einen Ventilator 204 für den Ölkühler 196 aufweist.

## Patentansprüche

1. Schwenkkolbenmaschine, mit einem Gehäuse (12), in dem zumindest ein Kolben (30) angeordnet ist, der um eine gehäusefeste Drehachse (38) in dem Gehäuse (12) umlaufen kann, und der beim Umlaufen um die Drehachse (38) um eine senkrecht zur Drehachse (38) verlaufende Schwenkachse (42) hin-und hergehende Schwenkbewegungen zwischen einer ersten Endstellung (OT) und einer zweiten Endstellung (UT) ausführt, wobei der zumindest eine Kolben (30) ein erstes Lauforgan (58) aufweist, das beim Umlaufen des Kolbens (30) um die Drehachse (38) entlang zumindest einer Steuerkurve (66) läuft, die so ausgebildet ist, dass die Schwenkbewegungen des zumindest einen Kolbens (30) aus der Umlaufbewegung des Lauforgans (58) entlang der Steuerkurve (66) abgeleitet werden wobei dem Kolben (30) zusätzlich zu dem Lauforgan (58) Rückführmittel zum Unterstützen der Rückführung des zumindest einen Kolbens (30) zumindest von der ersten Endstellung (OT) in die zweite Endstellung (UT) zugeordnet sind, **dadurch gekennzeichnet, dass** die Rückführmittel (78) ein zweites Lauforgan (86; 86') aufweisen, das mit dem zumindest einen Kolben (30) verbunden ist, und das entlang einer der Steuerkurve (66) axial in Bezug auf die Drehachse (38) seitlich benachbarten zweiten Steuerkurve (68) läuft, wenn der zumindest eine Kolben (30) um die Drehachse (38) umläuft.

2. Schwenkkolbenmaschine nach Ansprüch 1, **dadurch gekennzeichnet, dass** die zweite Steuerkurve (68) so ausgebildet ist, dass das entlang der zweiten Steuerkurve (68) laufende zweite Lauforgan (86; 86') einen Zug auf den zumindest einen Kolben (30) in Richtung zur zweiten Endstellung (UT) ausübt.

3. Schwenkkolbenmaschine nach Anspruch 1 oder 2, **dadurch gekennzeichnet, dass** das zweite Lauforgan (86) eine Laufrolle ist.

4. Schwenkkolbenmaschine nach Anspruch 1 oder 2, **dadurch gekennzeichnet, dass** das zweite Lauforgan (86') ein Gleitschuh ist.

5. Schwenkkolbenmaschine nach einem der Ansprüche 1 bis 4, **dadurch gekennzeichnet, dass** das zweite Lauforgan (86; 86') an dem zumindest einen Kolben federnd gelagert ist.

6. Schwenkkolbenmaschine nach einem der Ansprüche 1 bis 5, **dadurch gekennzeichnet, dass** die erste Steuerkurve (66) und die zweite Steuerkurve (68) als im Wesentlichen parallel zueinander verlaufende Kurvennuten ausgebildet sind, die durch einen Steg (104) voneinander getrennt sind, wobei das erste Lauforgan (58) und das zweite Lauforgan (86; 86') an zueinander gegenläufig geschwungenen Flanken der Kurvennuten geführt sind.

7. Schwenkkolbenmaschine nach einem der Ansprüche 1 bis 6, **dadurch gekennzeichnet, dass** in dem Gehäuse (12) zumindest ein zweiter Kolben (34) angeordnet ist, der zusammen mit dem zumindest einen Kolben (30) um die Drehachse (38) umlaufen kann, und der um eine Schwenkachse (44) verschwenkbar ist, die nicht parallel zu der Schwenkachse (42) des zumindest einen Kolben (30) verläuft, wobei der zumindest eine zweite Kolben (34) ein erstes Lauforgan (62), das entlang der zweiten Steuerkurve (68) des zumindest einen Kolbens (30) läuft, und ein zweites Lauforgan (82) aufweist, das zur Unterstützung der Rückführung des zumindest einen zweiten Kolbens (34) zumindest von einer ersten Endstellung (OT) in eine zweite Endstellung (UT) entlang der ersten Steuerkurve (66) des zumindest einen Kolbens (30) läuft.

8. Schwenkkolbenmaschine nach einem der Ansprüche 1 bis 7, **dadurch gekennzeichnet, dass** die Rückführmittel eine Unterdruckquelle (166) zur Erzeugung eines an einer Kolbenrückseite des zumindest einen Kolbens (30) anliegenden Unterdrucks aufweisen.

9. Schwenkkolbenmaschine nach einem der Ansprüche 1 bis 8, **dadurch gekennzeichnet, dass** das erste Lauforgan (58) als Rolle ausgebildet ist, unter dessen Lauffläche Ventilationsschaufeln (108) angeordnet sind.

## Claims

1. An oscillating piston engine, comprising a housing (12) in which at least one piston (30) is arranged which can revolve in the housing (12) about an axis of rotation (38) which is fixed in relation to the housing, and which performs when revolving about the axis of rotation (38) reciprocating pivoting movements about a pivot axis (42) extending perpendicularly to the axis of rotation (38) between a first end position (OT) and a second end position (UT), the at least one piston (30) having a first running element (58) which runs, as the piston (30) revolves about the axis of rotation (38), along at least one control cam (66) which is configured in such a way that the pivoting movements of the at least one piston (30) are derived from the revolving movement of the running element (58) along the control cam (66), wherein return means for assisting the return of the at least one piston (30) at least from the first end position (TDC) to the second end position (BDC) are associated with the piston (30) in addition to the running element (58), **characterized in that** the return means (78) have a second running element (86; 86') which is connected to the at least one piston (30) and which runs along a second control cam (68) which is, in axial direction with respect to the axis of rotation (38), laterally adjacent to the control cam (66) when the at least one piston (30) revolves about the axis of rotation (38).

2. The oscillating piston engine of claim 1, **characterized in that** the second control cam (68) is configured in such a way that the second running element (86; 86'), which runs along the second control cam (68), exerts a tensile force on the at least one piston (30) in the direction toward the second end position (BDC).

3. The oscillating piston engine of claim 1 or 2, **characterized in that** the second running element (86) is a running roller.

4. The oscillating piston engine of claim 1 or 2, **characterized in that** the second running element (86') is a sliding shoe.

5. The oscillating piston engine of any of claims 1 through 4, **characterized in that** the second running element (86; 86') is resiliently mounted on the at least one piston.

6. The oscillating piston engine of any of claims 1 through 5, **characterized in that** the first control cam (66) and the second control cam (68) are configured as cam grooves which extend substantially parallel to each other and are separated from each other by a web (104), the first running element (58) and the second running element (86; 86') being guided on flanks of the cam grooves that are curved in opposite directions to each other.

7. The oscillating piston engine of any of claims 1 through 6, **characterized in that** at least a second piston (34) is arranged in the housing (12)which can revolve together with the at least one piston (30) about the axis of rotation (38) and which can pivot about a pivot axis (44) which does not run parallel to the pivot axis (42) of the at least one piston (30), the at least one second piston (34) having a first running element (62) which runs along the second control cam (68) of the at least one piston (30) and a second running element (82) which runs, to assist the return of the at least one second piston (34), at least from a first end position (TDC) to a second end position (BDC) along the first control cam (66) of the at least one piston (30).

8. The oscillating piston engine of any of claims 1 through 7, **characterized in that** the return means has a negative-pressure source (166) for generating a negative pressure applied to a back of the at least one piston.

9. The oscillating piston engine of any of claims 1 through 8, **characterized in that** the first running element (58) is configured as a roller, below the running surface of which ventilation blades (108) are arranged.

## Revendications

1. Machine à piston pivotant, comprenant un carter (12), dans lequel est disposé au moins un piston (30), qui peut tourner autour d'un axe de rotation (38) solidaire du carter dans le carter (12), et qui, lors de la rotation autour de l'axe de rotation (38), effectue autour d'un axe de pivotement (42) s'étendant perpendiculairement à l'axe de rotation (38) des mouvements pivotants de va-et-vient entre une première position finale (OT) et une seconde position finale (UT), le au moins un piston (30) présentant un premier organe de roulement (58) qui, lors de la rotation du piston (30) autour de l'axe de rotation (38), passe le long d'au moins une came de commande (66), qui est conçue de telle sorte que les mouvements pivotants du au moins un piston (30) sont dérivés du mouvement rotatoire de l'organe de roulement (58) le long de la came de commande (66), des moyens de recul pour le soutien du recul du au moins un piston (30) au moins de la première position finale (OT) dans de la seconde position finale (UT) étant attribués au piston (30) en supplément de l'organe de roulement (58), **caractérisée en ce que** les moyens de recul (78) présentent un second organe de roulement (86 ; 86'), qui est relié à au moins un piston (30), et passe le long d'une seconde came de commande (68) voisine latéralement de la came de commande (66) axialement par rapport à l'axe de rotation (38) lorsque le au moins un piston (30) tourne autour de l'axe de rotation (38).

2. Machine à piston pivotant selon la revendication 1, **caractérisée en ce que** la seconde came de commande (68) est conçue de telle sorte que le second organe de roulement (86, 86') passant le long de la seconde came de commande (68) exerce une traction sur le au moins un piston (30) en direction de la seconde position finale (UT).

3. Machine à piston pivotant selon la revendication 1 ou 2, **caractérisée en ce que** le second organe de roulement (86) est un galet de roulement.

4. Machine à piston pivotant selon la revendication 1 ou 2, **caractérisée en ce que** le second organe de roulement (86') est un patin de guidage.

5. Machine à piston pivotant selon l'une quelconque des revendications 1 à 4, **caractérisée en ce que** le second organe de roulement (86 ; 86') est logé de manière élastique sur le au moins un piston.

6. Machine à piston pivotant selon l'une quelconque des revendications 1 à 5, **caractérisée en ce que** la première came de commande (66) et la seconde came de commande (68) sont réalisées comme des rainures de came agencées sensiblement parallèlement entre elles, qui sont séparés les unes des autres par une nervure (104), le premier organe de roulement (58) et le second organe de roulement (86 ; 86') étant guidés sur des flancs, incurvés dans le sens contraire les uns par rapport aux autres, des rainures de came.

7. Machine à piston pivotant selon l'une quelconque des revendications 1 à 6, **caractérisée en ce que** dans le carter (12) est disposé au moins un second piston (34), qui peut tourner en même que le au moins un piston (30) autour de l'axe de rotation (38), et qui peut basculer autour d'un axe pivotant (44) qui n'est pas parallèle à l'axe de pivotement (42) du au moins un piston (30), le au moins un second piston (34) présentant un premier organe de roulement (62), qui passe le long de la seconde came de commande (68) du au moins un piston (30), et un second organe de roulement (82), qui, pour le soutien du recul du au moins un second piston (34) au moins d'une première position finale (OT) à une seconde position finale (UT), passe le long de la première came de commande (66) du au moins un piston (30).

8. Machine à piston pivotant selon l'une quelconque des revendications 1 à 7, **caractérisée en ce que** les moyens de recul présentent une source de dépression (166) pour générer une dépression s'appliquant sur une face arrière de piston du au moins un piston (30).

9. Machine à piston pivotant selon l'une quelconque des revendications 1 à 8, **caractérisée en ce que** le premier organe de roulement (58) est conçu comme galet, au-dessous de la surface de roulement duquel sont disposées des ailettes de ventilation (108).
